(19) Europäisches Patentamt
European Patent Office
Office européen des brevets

(11) **EP 1 879 048 B1**

(12) **EUROPÄISCHE PATENTSCHRIFT**

(45) Veröffentlichungstag und Bekanntmachung des Hinweises auf die Patenterteilung:
**21.01.2009 Patentblatt 2009/04**

(51) Int Cl.:
***G01S 15/93*** *(2006.01)*     ***G01S 7/524*** *(2006.01)*

(21) Anmeldenummer: **07110266.9**

(22) Anmeldetag: **14.06.2007**

(54) **Verfahren zur Abstandsmessung und Ultraschallabstandssensor**

Method for distance measuring and ultrasound distance measuring sensor

Procédé destiné à la mesure de la distance et capteur de distance par ultrasons

(84) Benannte Vertragsstaaten:
**DE FR GB IT**

(30) Priorität: **13.07.2006 DE 102006032542**

(43) Veröffentlichungstag der Anmeldung:
**16.01.2008 Patentblatt 2008/03**

(73) Patentinhaber: **ROBERT BOSCH GMBH**
**70442 Stuttgart (DE)**

(72) Erfinder:
• **Sohnke, Thorsten**
**65835 Liederbach (DE)**
• **Ruhs, Mirko**
**64646 Heppenheim (DE)**

(56) Entgegenhaltungen:
**EP-A2- 0 574 925**     **WO-A-20/05104615**
**US-A- 4 914 951**     **US-A- 5 991 234**
**US-A1- 2006 022 680**

EP 1 879 048 B1

**Beschreibung**

Stand der Technik

Die Erfindung geht aus von einem Verfahren zur Abstandsmessung und einem Ultraschallabstandssensor nach der Gattung der unabhängigen Ansprüche. Aus der US 5, 991,234 ist bereits ein Ultraschallsensorsystem bekannt, bei dem eine Korrektur der Betriebsfrequenz für das Aussenden der Schallwellen erfolgt. Hierzu wird vorgeschlagen, eine Kalibriermessung durchzuführen, um die Resonanzfrequenz des Ultraschallsensors zu ermitteln. In Abhängigkeit von dem Ergebnis wird der Ultraschallsensor im Anschluss mit der temperaturabhängigen Resonanzfrequenz betrieben, wobei der Ultraschallsensor mit der ermittelten Resonanzfrequenz zu einer Schwingung angeregt wird. Hiermit ist es insbesondere möglich, Temperaturschwankungen auszugleichen, die die Resonanzfrequenz des Ultraschallsensors verschieben können.

Aus der EP 0 574 925 A2 ist eine Ultraschallempfangsvorrichtung bekannt, die zu einer Abstandsberechnung mittels eines Laufzeitverfahrens dient. Aus der DopplerVerschiebung der empfangenen Frequenz wird eine Geschwindigkeit eines erfassten Hindernisses in Bezug auf den Ultraschallsensor bestimmt und zur Berechnung einer Kollisionszeit verwendet.

Aus der US 4,914,951 ist eine Vorrichtung zur Abstandsmessung bekannt, bei der durch eine Veränderung der Aussendefrequenz die Nachschwingzeit eines Ultraschallsensors verändert wird, um näherliegende Objekte erfassen zu können.

Offenbarung der Erfindung

Vorteile der Erfindung

Das erfindungsgemäße Verfahren zur Abstandsmessung mit den Merkmalen des Anspruchs 1 hat demgegenüber den Vorteil, dass bei einer Bewegung eines Hindernisses gegenüber einem Ultraschallerzeuger für eine Abstandsmessung zu dem Hindernis eine durch die Bewegung hervorgerufene Frequenzverschiebung ausgeglichen wird. Hierdurch ist es möglich, eine zuverlässigere und genauere Messung zu erhalten.

Wird ein Ultraschallsensor in einem Resonanzfrequenzbereich zu einer Schwingung angeregt, werden Schallwellen in diesem Resonanzfrequenzbereich ausgestrahlt. Diese Schallwellen können von einem eventuellen Hindernis reflektiert und von dem Ultraschallsensor wieder empfangen werden. Bei stehenden Hindernissen ändert sich dabei die Frequenz des Ultraschallsignals nicht. Wird jedoch das Hindernis gegenüber dem Ultraschallsensor bewegt und/oder bewegt sich der Ultraschallsensor gegenüber dem Hindernis, so kommt es zu einer Dopplerverschiebung. Hierdurch ergibt sich für das von dem Hindernis reflektierte Ultraschallsignal eine andere Frequenz als die Resonanzfrequenz des Ultraschallsensors. Das reflektierte Signal hat jedoch eine wesentlich geringere Amplitude als das ausgesendete Signal, da das Signal bei der Reflexion und der Leitung durch die Luft stark abgeschwächt wird. Zusätzlich können Störgeräusche, also Hintergrundschall, hinzukommen. Trifft das Schallsignal außerhalb der Resonanzfrequenz auf den Ultraschallsensor, so kann es dazu kommen, dass der Ultraschallsensor nur noch schwach angeregt wird und infolge dessen sich das Ultraschallsignal nicht mehr oder nicht mehr hinreichend von einem Hintergrundrauschen abhebt. Hierdurch könnte ein reflektiertes Signal dann nicht mehr detektiert werden. Damit wäre eine zuverlässige Abstandsmessung nicht möglich. Gemäß der vorliegenden Erfindung wird nun bereits das Sendesignal in seiner Frequenz derart verändert, dass nach der durch die Relativbewegung zwischen Ultraschallsensor und Hindernis hervorgerufenen Frequenzverschiebung das reflektierte und empfangene Signal in dem Resonanzbereich des Ultraschallsensors liegt. Zwar tritt nun bei der Erzeugung des Ultraschallsignals eine Dämpfung auf. Trotz der Dämpfung ist es jedoch möglich, ein hinreichend intensives Schallsignal zu erzeugen, da das erzeugte Schallsignal eine viel größere Amplitude als ein Hintergrundrauschen aufweist. Wird nun das reflektierte Schallsignal in dem Resonanzfrequenzbereich empfangen, so kann der Ultraschallsensor hinreichend angeregt werden, um das Signal detektieren zu können. Damit ist eine zuverlässige Detektion des reflektierten Schallsignals möglich.

Der erfindungsgemäße Ultraschallsensor mit den Merkmalen des nebengeordneten Anspruchs hat entsprechend den Vorteil, eine zuverlässige Detektion des empfangen, von dem Hindernis reflektierten Signals in dem Resonanzfrequenzbereich zu ermöglichen. Hierzu wird eine Membran des Sensors durch eine Ansteuereinheit zum Ausgleich einer durch die Bewegung mit der Differenzgeschwindigkeit zwischen dem Ultraschallabstandssensor und dem Hindernis ermittelten Frequenzverschiebung außerhalb des Resonanzfrequenzbereichs angesteuert.

Durch die in den abhängigen Ansprüchen aufgeführten Maßnahmen sind vorteilhafte Weiterbildungen des in dem Anspruch 1 angegebenen Verfahrens und des in dem nebengeordneten Anspruch angegebenen Ultraschallabstandssensors möglich. Besonders vorteilhaft ist es, das empfangene Signal mit einem Bandpass auf den Resonanzfrequenzbereich zu filtern. Da durch die erfindungsgemäße Variation des ausgesendeten Ultraschallsignals sichergestellt wird, dass das reflektierte Signal in dem Resonanzfrequenzbereich empfangen wird, können hierdurch weitere Störungen ausgefiltert werden, ohne dass die Gefahr besteht, dass das eigentliche Nutzsignal zur Abstandsbestimmung ausgefiltert wird.

Weiterhin ist es vorteilhaft, dass bei einer Signalaussendung mit einer zunehmenden Abweichung der Frequenz des ausgesendeten Schallsignals von dem Resonanzfrequenzbereich die Sendeleistung verstärkt wird. Hierdurch ist es möglich, dass die Dämpfung, die mit zunehmender Abweichung von dem Resonanzfrequenzbereich ebenfalls zunimmt, durch eine verstärkte Amplitude des Anregungssignals ausgeglichen wird. Somit kann sichergestellt werden, dass das Schallsignal stets mit dem gleichen Schalldruck oder zumindest mit einem hinreichenden Schalldruck unabhängig von der Dämpfung für die jeweilige Frequenz ausgesendet wird.

Ferner ist es vorteilhaft, die gewählte Frequenzabweichung entsprechend einer Dopplerverschiebung eines Signals bei der Differenzgeschwindigkeit zu wählen. Durch eine Anpassung an die Dopplerverschiebung selbst kann ein besonders guter Ausgleich erreicht werden.

Ferner ist es vorteilhaft, die Umgebungstemperatur zu erfassen. Da die Schallgeschwindigkeit temperaturabhängig ist, wird bei einer Temperaturänderung nicht nur die Laufzeit des Ultraschallsignals durch die Änderung der Schallgeschwindigkeit beeinflusst, sondern auch der Einfluss des Dopplereffektes. Durch eine Berücksichtigung einer Temperaturänderung kann sowohl die Laufzeitermittlung des Ultraschallsignals, aber auch die Frequenzkorrektur des Sendesignals an eine Temperaturänderung angepasst werden.

Ferner ist es vorteilhaft, die Differenzgeschwindigkeit zwischen dem Ultraschallabstandssensor und dem Hindernis aus einer Abstandsmessung mittels des Ultraschallsensors selbst zu bestimmen. Eine Geschwindigkeitsbestimmung kann dabei aus der Änderung des Abstandes pro Zeiteinheit ermittelt werden. So ist es beispielsweise möglich, die erste Ableitung des Abstands nach der Zeit zu bestimmen. Auf diese Weise ist es möglich, die Differenzgeschwindigkeit zwischen dem Ultraschallabstandssensor und dem Hindernis ohne weitere Messeinrichtungen zu bestimmen.

Weiterhin ist es vorteilhaft, an dem Ultraschallabstandssensor eine Schnittstelle zu einem Wegsensor zur Ermittlung einer Eigengeschwindigkeit des Ultraschallabstandssensors bzw. der Einrichtung zu ermitteln, in der der Ultraschallabstandssensor angeordnet ist. Hierdurch ist es möglich, insbesondere bei stehenden Hindernissen die aktuelle Differenzgeschwindigkeit zwischen dem Ultraschallabstandssensor und dem Hindernis aus dem zurückgelegten Weg pro Zeiteinheit zu bestimmen.

Zur Anpassung der Sendeleistung ist vorteilhaft ein regelbarer Verstärker vorgesehen, der in Abhängigkeit von der Abweichung des Sendesignals von dem Resonanzfrequenzbereich angesteuert werden kann. Hierdurch ist eine leichte Anpassung des Ansteuersignals des Ultraschallabstandssensors möglich.

Eine Temperaturermittlung kann vorteilhaft über eine Datenschnittstelle des Ultraschallabstandssensors zu einem Temperatursensor außerhalb des Ultraschallabstandssensors erfolgen. Damit kann ein Temperatursensor an einer geeigneten Stelle angeordnet werden.

Die Filterung erfolgt vorteilhaft über eine beispielsweise in dem Ultraschallabstandssensor angeordnete Bandpasseinheit, über die ein elektronisches Signal, das aus dem empfangenen Schallsignal erzeugt wurde, auf den Resonanzfrequenzbereich gefiltert wird.

Kurze Beschreibung der Zeichnungen

Ausführungsbeispiele der Erfindung sind in den Zeichnungen dargestellt und in der nachfolgenden Beschreibung näher erläutert. Es zeigen Figur 1 einen erfindungsgemäßen Ultraschallabstandssensor, Figur 2 ein Schaubild für eine Funktionsweise eines erfindungsgemäßen Ultraschallabstandssensors in einem Kraftfahrzeug, Figur 3 ein Diagramm für eine Dämpfung eines Ultraschallabstandssensors, Figur 4 ein Ausführungsbeispiel für eine Korrekturfunktion zur Verschiebung der Sendefrequenz des Ultraschallabstandssensors in Abhängigkeit von einer Differenzgeschwindigkeit zwischen dem Ultraschallabstandssensor und einem Hindernis.

Ausführungsformen der Erfindung

Das erfindungsgemäße Verfahren kann für beliebige Ultraschallabstandssensoren in verschiedenen Verwendungen genutzt werden, bei der das Zielobjekt, zu dem der Abstand gemessen werden soll, gegenüber dem Ultraschallabstandsensor bewegt wird. Beispielsweise kann dieser Fall im Straßenverkehr auftreten, wenn ein Fahrzeug sich relativ zu anderen Fahrzeugen im Straßenverkehr bewegt. Im Folgenden ist die vorliegende Erfindung daher am Beispiel eines Ultraschallabstandssensors an einem Kraftfahrzeug erläutert.

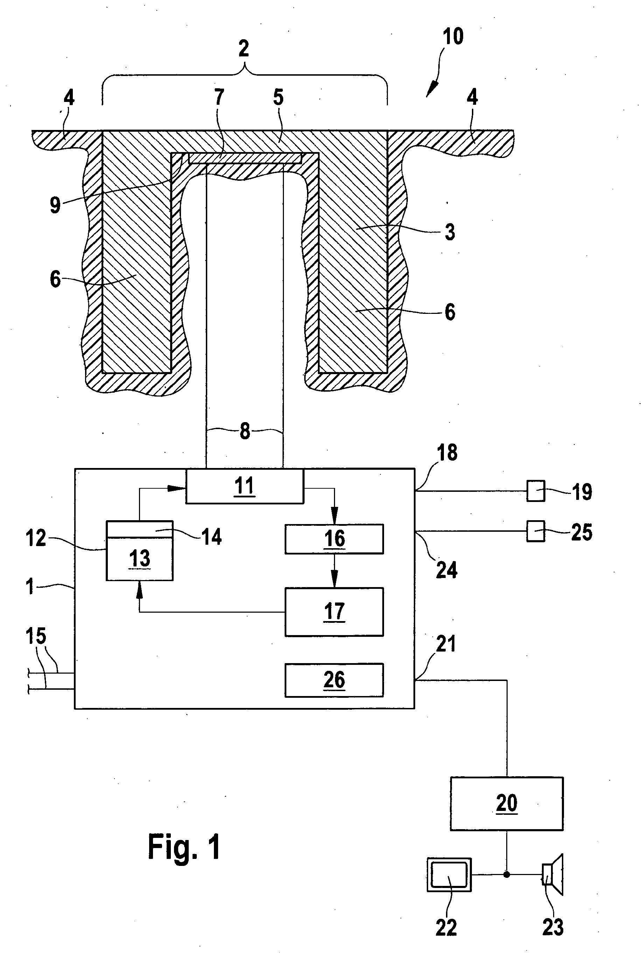

In der Figur 1 ist ein Ultraschallabstandssensor gezeigt, der aus einer elektronischen Ansteuereinheit 1 sowie einem mit der Ansteuereinheit 1 verbundenen Sende- und Empfangselement 2 besteht. Das Sende- und Empfangselement 2 besteht aus einem Sensortopf 3, der zylinderförmig ausgebildet ist. Der Sensortopf 3 ist im vorliegenden Ausführungsbeispiel in einem Stoßfänger 4 eines Kraftfahrzeugs eingelassen. Der Sensortopf 3 ist beispielsweise aus Aluminium gebildet. Der Sensortopf 3 weist einen Topfboden auf, der eine schwingfähige Membran 5 bildet. Die Membran 5 ist hierzu dünner ausgeführt, als eine Wandung 6 des Sensortopfs 3. Die Membran 5 wird durch eine Piezoelement 7 zu einer Schwingung angeregt. Das Piezoelement 7 ist an einer der Fahrzeugaußenseite abgewandten Seite auf einem Topfboden 9 des Sensortopfs 3 angeordnet. Das Piezoelement 7 ist über elektrische Zuleitungen 8 mit der Ansteuereinheit 1 verbunden. Die für den Betrieb des Piezoelements 7 im Sendebetrieb erforderliche Hochspannung wird von einer Transformationseinheit 11 in der Ansteuereinheit 1 erzeugt. Die Transformationseinheit 11 wiederum erhält ein Wechselspannungssignal von einem Wechselspannungsgenerator 12. Der Wechselspannungsgenerator 12 besteht aus einer Wechselspannungserzeugungseinheit 13 und einer Verstärkungseinheit 14. Eine Stromversorgung der Ansteuereinheit 1 zur Erzeugung des Ansteuerungssignals des Piezoelements 7 erfolgt über Zuleitungen 15, über die eine Versorgungsspannung an die Ansteuereinheit 1 geführt wird.

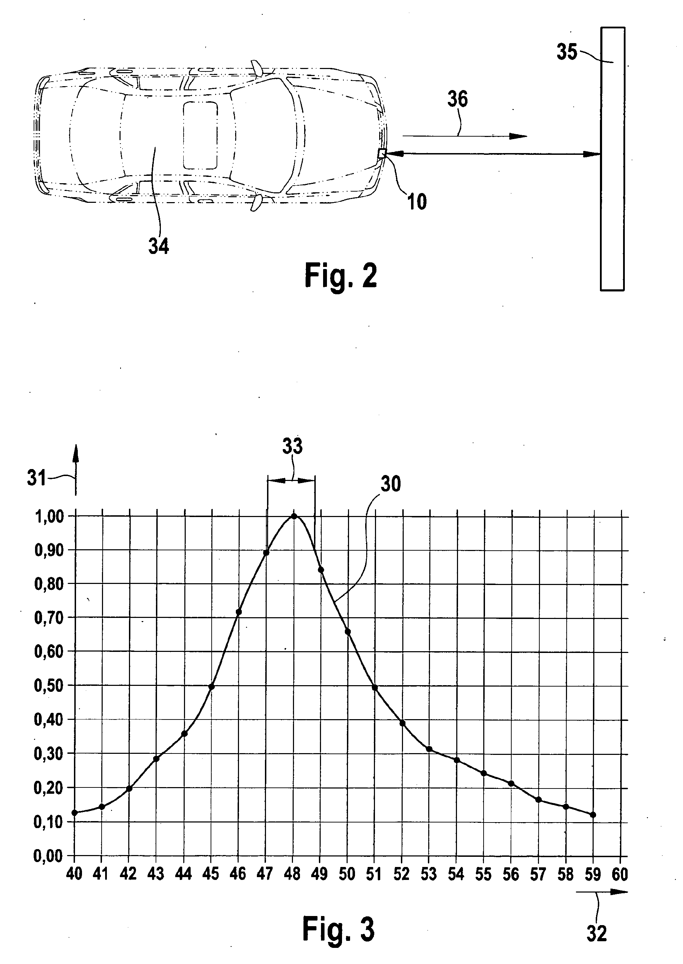

Über ein Hochspannungs-Wechselstromsignal wird das Piezoelement 7 zu einer mechanischen Schwingung angeregt. Die Schwingung überträgt sich auf die Membran 5. Die Membran 5 weist eine Resonanzfrequenz auf, die sich aus den Materialeigenschaften der Membran 5, wie beispielsweise dem Elastizitätsmodul und den Abmessungen der Membran ergibt, also insbesondere aus der Dicke und aus dem Durchmesser der Membran. Typische Resonanzfrequenzen liegen zwischen 35 kHz und 60 kHz. Bevorzugt werden die Sensortöpfe derart ausgebildet, dass die Resonanzfrequenz etwa 48 kHz beträgt. In der Figur 3 ist beispielhaft eine Dämpfungskurve 30 für einen Ultraschallsensor dargestellt. Hierbei ist die auf 1 normierte Dämpfung auf der y-Achse 31 gegenüber der Frequenz in kHz auf der x-Achse 32 dargestellt. Eine normierte Dämpfung von 1,00 bedeutet keine Abschwächung des Signals durch Dämpfung und damit Resonanz. Ein Wert von 0,10 auf der y-Achse bedeutet entsprechend eine Dämpfung auf 10%. Das Maximum der Dämpfungskurve liegt im hier vorliegenden Fall bei 48,0 kHz. Da die Resonanzfrequenz witterungsabhängig, insbesondere temperaturabhängig, aber auch herstellungsbedingt schwanken kann, wird im vorliegenden Ausführungsbeispiel als ein Resonanzfrequenzbereich 33 derjenige Frequenzbereich definiert, bei dem das Signal um maximal 10% gedämpft wird. Damit ergibt sich ein Resonanzfrequenzbereich von etwa 47 bis 49 kHz. Je nach Ausführung des Sensortopfes und Wahl der Resonanzfrequenz sowie dem Verlauf der Dämpfungskurve sind auch andere Grenzen des Resonanzbereiches möglich.

Ist zunächst von einem gegenüber dem Ultraschallabstandssensor unbewegten Hindernis auszugehen, so wird das Piezoelement 7 mit einer Frequenz von 48 kHz von der Ansteuereinheit 1 zu einer Schwingung angeregt. Eine Signalaussendung ist anhand der Figur 2 erläutert. Ein Ultraschallabstandsensor 10, wie in der Figur 1 gezeigt, ist in einem Kraftfahrzeug 34 in einem Stoßfänger angeordnet. Ein Ultraschallsignal wird von dem Ultraschallabstandsensor 10 ausgesendet und trifft auf ein Hindernis 35. Das Ultraschallsignal wird von dem Hindernis 35 reflektiert und von dem Ultraschallabstandsensor 10 wieder empfangen. Das Empfangen erfolgt dabei derart, dass das reflektierte Schallsignal die Membran 5 wieder zu einer Schwingung anregt. Bei einem unbewegten Hindernis 35 und bei einem hierzu unbewegten Fahrzeug 34 erfolgt diese Anregung mit der Frequenz des reflektierten Ultraschallsignals, die gleich der Frequenz des ausgesendeten Ultraschallsignals ist. Bei einer Aussendung von einem Ultraschallsignal mit 48 kHz wird also die Membran 5 auch mit dieser Frequenz wieder angeregt. Durch die Schwingung der Membran 5 wird das Piezoelement 7 derart gedehnt und gestaucht, dass eine Spannung induziert wird, die über die Zuleitungen 8 von der Transformationseinheit 11 abgreifbar sind. Die Transformationseinheit 11 gibt das empfangene Signal an eine Filtereinheit 16 weiter. Die Filtereinheit 16 ist bevorzugt als ein Bandpassfilter ausgelegt, der nur Signale in dem Resonanzfrequenzbereich 33 durchlässt. Die Bandpassfiltereinheit 16 gibt ein Ausgangssignal an eine Recheneinheit 17 weiter, die das empfangene Signal auswertet. Eine Auswertung erfolgt derart, dass das empfangene Signal in einen Zeitbezug zu dem ausgesendeten Signal gesetzt wird. Das Produkt aus Laufzeit und Schallgeschwindigkeit ergibt die zurückgelegte Wegstrecke des Ultraschallsignals und damit den doppelten Abstand zu dem Hindernis. Die Recheneinheit 17 steuert auch die Wechselspannungserzeugungseinheit 13 zur Aussendung des Ultraschallsignals an, so dass in der Recheneinheit ein Zeitpunkt der Signalaussendung vorliegt. Zur Herstellung des Zeitbezugs für die Laufzeitbestimmung verfügt die Recheneinheit 17 über eine Uhrenschaltung. Bevorzugt ist die Ansteuereinheit 1 ferner über eine Datenschnittstelle 18 mit einem Temperatursensor 19 verbunden, der bevorzugt an einer anderen Stelle im Fahrzeug angeordnet ist. Über den Temperatursensor 19 steht die Lufttemperatur zur Verfügung. In einer Speichereinheit 26 der Ansteuereinheit 1 sind bevorzugt für verschiedene Lufttemperaturen die der Temperatur jeweils entsprechende Schallgeschwindigkeit abgelegt. Ein entsprechendes Abstandssignal wird über einen Datenausgang 21 an eine Auswerteeinheit 20 im Fahrzeug weitergegeben. An die Auswerteeinheit 20 können noch weitere Ultraschallsensoren angeschlossen sein. In Abhängigkeit von dem ermittelten Abstand kann die Auswerteeinheit 20 über eine Anzeige 22 und/oder einen Lautsprecher 23 beispielsweise eine Warnung vor einem zu geringen Abstand, den Abstandswert selbst oder Fahranweisungen zur Umfahrung des Hindernisses an einen Fahrer des Fahrzeugs ausgeben.

Bewegt sich nun, wie in der Figur 2 mittels des Pfeils 36 dargestellt, das Fahrzeug 34 auf das Hindernis 35 zu, so kommt es sowohl bei einer Reflexion des Schallsignals an dem Hindernis 35, als auch bei einem erneuten Empfangen des reflektierten Schallsignals durch den bewegten Ultraschallabstandsensor 10 jeweils zu einer durch die Relativbewegung des Kraftfahrzeugs 34 zu dem Hindernis 35 hervorgerufenen Dopplerverschiebung der Frequenz des Schallsignals. Bei einer Annäherung des Fahrzeugs zu dem Hindernis 35 nimmt die Frequenz zu, bei einer Entfernung des Hindernisses von dem Fahrzeug nimmt die Frequenz ab.

Für die Reflexion des Ultraschallsignals an dem Hindernis ist von einer bewegten Quelle und einem ruhenden Empfänger auszugehen, so dass sich

$$f = f_0 \times \left( \frac{v}{1 - \frac{v}{c}} \right)$$ für eine Annäherung zwischen Ultraschallsensor und Hindernis und $f = f_0 \times \left( \frac{v}{1 + \frac{v}{c}} \right)$ für eine zunehmende Entfernung zwischen Fahrzeug und Hindernis für ein ruhendes Hindernis ergeben.

Hierbei bezeichnen f die sich ergebende Frequenz, $f_0$ die Ausgangsfrequenz, $v$ die Geschwindigkeit der Annäherung/Entfernung zwischen Sensor und Hindernis und c die Schallgeschwindigkeit.

Für das erneute Empfangen des reflektierten Ultraschallsignals ist von einem bewegten Empfänger und einer ruhenden Quelle auszugehen. In diesem Fall

gilt $\quad f = f_0 \times (1 + \dfrac{v}{c})\quad$ für eine Annäherung und $f = f_0 \times (1 - \dfrac{v}{c})$ für eine Entfernung zwischen Ultraschallsensor und Hindernis.

Insgesamt ergibt sich damit für eine Annäherung zwischen Sensor und Hindernis aus beiden Effekten

zusammen $\quad f = f_0 \times \dfrac{c+v}{c-v}\quad$ und $\quad f = f_0 \times \dfrac{c-v}{c+v}\quad$ für eine Entfernungszunahme.

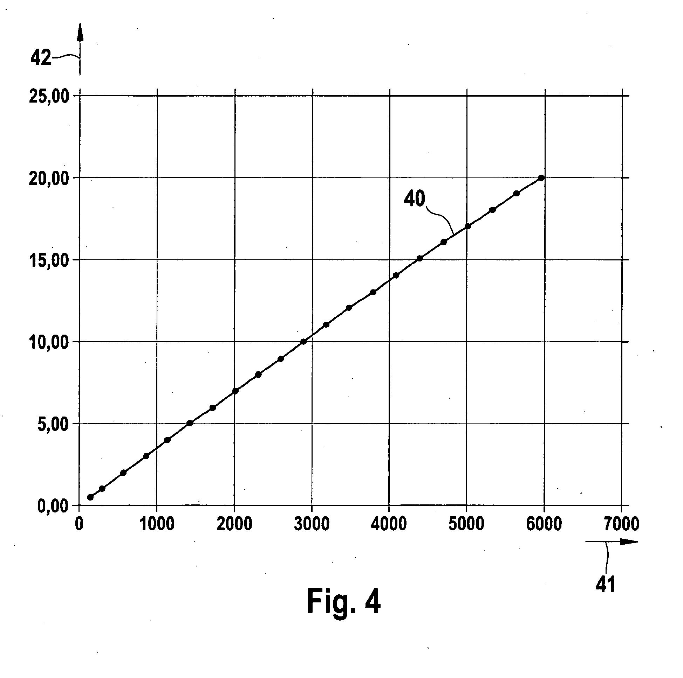

In der Figur 4 ist eine entsprechende Frequenzverschiebungskurve 40 dargestellt, bei der die Frequenzverschiebung in Hertz auf der x-Achse 41 gegenüber dem Betrag einer Geschwindigkeit zwischen Hindernis und Ultraschallabstandsensor in m/s auf der y-Achse 42 aufgetragen ist. Die dargestellte Frequenzverschiebungskurve 40 bezieht sich auf eine Resonanzfrequenz von 48 kHz bei einer angenommenen Schallgeschwindigkeit von 340 m/s. Bei einer Geschwindigkeit von 10 m/s kommt es also etwa zu einer Frequenzverschiebung von 3 kHz. Bei einer Annäherung zwischen Hindernis und Ultraschallabstandssensor würde also ein Schallsignal, das mit 48 kHz ausgesendet würde, als ein Schallsignal mit 51 kHz wieder auf den Ultraschallsensor auftreffen. Entsprechend würde ein Schallsignal, das mit 45 kHz ausgesendet wurde, mit 48 kHz wieder auf den Ultraschallsensor auftreffen. Damit nun das reflektierte Ultraschallsignal in etwa in dem Resonanzfrequenzbereich wieder auf den Ultraschallsensor auftrifft, wird bei einer Annäherung des Fahrzeugs auf das Hindernis mit einer Geschwindigkeit von 10 m/s das Piezoelement nicht mit einem Anregungssignal der Frequenz von 48 kHz angesteuert, sondern die Frequenz des Ansteuerungssignals wird verändert. Hierzu wird die Frequenz des Ansteuerungssignals vorzugsweise auf 45 kHz um 3 kHz verringert. Infolge des Dopplereffekts wird nun das reflektierte Schallsignal in etwa mit 48 kHz empfangen.

Bei einer detektierten Zunahme der Entfernung von dem Hindernis zu dem Sensor erfolgt eine Ansteuerung des Piezoelements mit einer Frequenz von 51 kHz, so dass in diesem Fall ebenfalls das reflektierte Signal mit einer Frequenz von 48 kHz empfangen wird, wie oben bereits erläutert. In Abhängigkeit von einer Geschwindigkeitsdifferenz zwischen dem Fahrzeug 34 bzw. dem Ultraschallabstandsensor 10 gegenüber dem Hindernis 35 legt die Recheneinheit 17 hierzu eine entsprechende Korrektur der Ausgangsfrequenz der Wechselspannungserzeugungseinheit 13 fest. Eine entsprechende Korrekturkurve, die den Zusammenhang zwischen der Geschwindigkeit und der Korrektur festlegt, beispielsweise gemäß der Figur 4, ist bevorzugt in dem Speicher 26 abgelegt. Hierbei kann auch berücksichtigt werden, dass der Dopplereffekt, wie in der obigen Formel dargestellt ist, selbst wieder frequenzabhängig ist. Ferner kann aber auch eine lediglich genäherte Vorschrift zur Korrektur des ausgesendeten Ultraschallsignals in dem Speicher 26 abgelegt sein.

Ferner kann es vorgesehen sein, die Amplitude des Ansteuersignals des Piezoelementes mit einer zunehmenden Abweichung der Sendefrequenz von dem Resonanzfrequenzbereich bzw. der Resonanzfrequenz zu erhöhen. Um die zunehmende Dämpfung bei der Aussendung abseits des Resonanzfrequenzbereichs auszugleichen, kann es z. B. vorgesehen sein, die Amplitude ab einer Abweichung von 1 kHz um 10%, ab einer Abweichung von 2 kHz um 20% und ab einer Abweichung von 3 kHz von der Resonanzfrequenz um 30% zu erhöhen. Alternativ kann auch eine lineare Abhängigkeit zwischen der Amplitude und der Geschwindigkeit zu dem Hindernis vorgesehen sein. Eine Abhängigkeit ist bevorzugt ebenfalls in dem Speicher 26 abgelegt. Eine der gespeicherten Abhängigkeit entsprechende Steuergröße wird von der Recheneinheit 17 zur Steuerung der Verstärkungseinheit 14 in der Wechselspannungserzeugungseinheit 13 weitergeleitet, mittels der das entsprechende Ansteuerungssignal des Piezoelements 7 erzeugt wird.

In einer weiteren Ausführungsform kann auch für verschiedene Temperaturen jeweils eine zugehörige Korrekturkurve in dem Speicher 26 abgelegt sein, um die Temperaturabhängigkeit der Schallgeschwindigkeit und damit die Temperaturabhängigkeit des Dopplereffekts auszugleichen.

Zur Ermittlung der Geschwindigkeit des Ultraschallsensors bzw. des Fahrzeugs gegenüber dem Hindernis kann in einer ersten Ausführungsform über eine Datenschnittstelle 24 von der Ansteuereinheit 1 ein Wegesensor 25 bzw. ein Geschwindigkeitssensor des Fahrzeugs ausgelesen werden. Ein derartiger Sensor ermittelt beispielsweise die Raddrehung des Fahrzeugs pro Zeiteinheit und kann so aus der pro Zeit zurückgelegten Strecke die Fahrzeuggeschwindigkeit bestimmen. Insbesondere für den Fall, dass der erfindungsgemäße Abstandsmesssensor und das erfindungsgemäße Verfahren für Einparkvorgänge eingesetzt wird, bei der das Fahrzeug in Bezug zu ruhenden Hindernissen positioniert wird, kann davon ausgegangen werden, dass die übrigen Hindernisse ruhen, so dass die Geschwindigkeit des Fahrzeugs ungefähr als die relative Geschwindigkeit zu einem Hindernis in Fahrtrichtung angenommen werden kann. Somit kann die mittels des Geschwindigkeitssensors 25 ermittelte Geschwindigkeit als Geschwindigkeit zwischen Sensor und Hindernis angenommen und für die erfindungsgemäße Frequenzkorrektur des ausgesendeten Signals berücksichtigt werden.

In einer weiteren Ausgestaltung ist es jedoch auch möglich, aus der Änderung des Abstands pro Zeiteinheit, der von dem Ultraschallabstandsensor 10 gemessen wird, die Geschwindigkeit zu ermitteln, mit der sich der Ultraschallabstandsensor gegenüber dem Hindernis bewegt. Eine Auswertung kann durch die Recheneinheit 17 bzw. die Auswerteeinheit 20 erfolgen. In einer weiteren, in der Figur 1 nicht dargestellten Ausführungsform, ist es auch möglich, dass ein weiteres Abstandsmesssystem, beispielsweise ein Radarsystem, die Geschwindigkeit gegenüber dem Hindernis bestimmt.

**Patentansprüche**

1. Verfahren zur Abstandsmessung, wobei ein Ultraschallsignal erzeugt und abgestrahlt wird, wobei das von einem Hindernis reflektierte Ultraschallsignal von einem Sensor empfangen wird und wobei die Laufzeit des reflektierten Signals zur Abstandsbestimmung ausgewertet wird, **dadurch gekennzeichnet, dass** eine Differenzgeschwindigkeit zwischen dem Sensor und dem Hindernis ermittelt wird und dass die Frequenz des ausgesendeten Ultraschallsignals in Abhängigkeit von der Differenzgeschwindigkeit derart außerhalb eines Resonanzfrequenzbereichs des Sensors gewählt wird, dass die Frequenz des empfangenen, reflektierten Signals in dem Resonanzfrequenzbereich liegt.

2. Verfahren nach Anspruch 1, **dadurch gekennzeichnet, dass** das empfangene Signal mit einem Bandpass auf den Resonanzfrequenzbereich gefiltert wird.

3. Verfahren nach einem der vorhergehenden Ansprüche, **dadurch gekennzeichnet, dass** bei der Signalaussendung mit zunehmender Abweichung der Frequenz des Sendesignals von dem Resonanzfrequenzbereich die Sendeleistung verstärkt wird.

4. Verfahren nach einem der vorhergehenden Ansprüche, **dadurch gekennzeichnet, dass** eine Abweichung von der Resonanzfrequenz für das Sendesignal derart gewählt wird, dass die gewählte Frequenzabweichung einer Dopplerverschiebung eines Signals bei der Differenzgeschwindigkeit entspricht.

5. Verfahren nach Anspruch 4, **dadurch gekennzeichnet, dass** die Lufttemperatur ermittelt wird und dass die Dopplerverschiebung unter Berücksichtigung der Temperaturabhängigkeit der Schallgeschwindigkeit bestimmt wird.

6. Verfahren nach einem der vorhergehenden Ansprüche, **dadurch gekennzeichnet, dass** die Differenzgeschwindigkeit aus einer zeitlichen Änderung des mittels des Ultraschallsensors bestimmten Abstandes des Sensors zu dem Hindernis bestimmt wird.

7. Ultraschallabstandssensor (10) mit einer Membran (5) zum Aussenden und Empfangen von Ultraschall, wobei die Membran (5) einen Resonanzfrequenzbereich (33) aufweist, und mit einer Ansteuereinheit (1) zur Anregung der Membran (5) zu einer Schwingung zum Erzeugen von Ultraschall, **gekennzeichnet durch** eine Erfassungseinheit (17) zum Erfassen einer Differenzgeschwindigkeit zu einem Hindernis, wobei die Membran **durch** die Ansteuereinheit (1) zu einer Schwingung außerhalb des Resonanzfrequenzbereichs (33) in Abhängigkeit von der Differenzgeschwindigkeit derart angeregt wird, dass die Frequenz eines empfangenen, von dem Hindernis reflektierten Signals in dem Resonanzfrequenzbereich (33) liegt.

8. Ultraschallabstandssensor nach Anspruch 7, **gekennzeichnet durch** eine Filtereinheit (16) zur Bandpassfilterung des empfangenen, reflektierten Signals auf den Resonanzfrequenzbereich (33).

9. Ultraschallabstandssensor nach einem der Ansprüche 7-8, **gekennzeichnet durch** einen regelbaren Verstärker (14) zur Regelung der Sendeleitung in Abhängigkeit der Abweichung des Sendesignals von dem Resonanzfrequenzbereich (33).

10. Ultraschallabstandssensor nach einem der Ansprüche 7-9, **gekennzeichnet durch** eine Datenschnittstelle (18) zu einem Temperatursensor (19) zur temperaturabhängigen Korrektur der Frequenz des ausgesendeten Ultraschallsignals.

11. Ultraschallabstandssensor nach einem der Ansprüche 7-10, **gekennzeichnet durch** eine Schnittstelle (24) zu einem Wegesensor (25) zur Ermittlung einer Eigengeschwindigkeit einer Bewegung des Ultraschallabstandssensors (10).

**Claims**

1. Method for measuring distance, an ultrasonic signal being generated and emitted, the ultrasonic signal reflected by an obstacle being received by a sensor, and the propagation time of the reflected signal being evaluated in order to determine the distance, **characterized in that** a differential velocity between the sensor and the obstacle is determined, and **in that** the frequency of the emitted ultrasonic signal is selected outside a resonant frequency range of the sensor on the basis of the differential velocity in such a manner that the frequency of the received reflected signal is in the resonant frequency range.

2. Method according to Claim 1, **characterized in that** the received signal is filtered to the resonant frequency range using a bandpass filter.

3. Method according to one of the preceding claims, **characterized in that** the transmission power is amplified during signal emission with increasing deviation of the frequency of the transmission signal from the resonant frequency range.

4. Method according to one of the preceding claims, **characterized in that** a deviation from the resonant frequency is selected for the transmission signal in such a manner that the selected frequency deviation corresponds to a Doppler shift of a signal at the differential velocity.

5. Method according to Claim 4, **characterized in that** the air temperature is determined, and **in that** the Doppler shift is determined taking into account the temperature dependence of the speed of sound.

6. Method according to one of the preceding claims, **characterized in that** the differential velocity is determined from a temporal change in the distance between the sensor and the obstacle, which distance is determined using the ultrasonic sensor.

7. Ultrasonic distance sensor (10) having a diaphragm (5) for emitting and receiving ultrasound, the diaphragm (5) having a resonant frequency range (33), and having a drive unit (1) for exciting the diaphragm (5) to oscillate in order to produce ultrasound, **characterized by** a detection unit (17) for detecting a differential velocity to an obstacle, the diaphragm being excited to oscillate outside the resonant frequency range (33) by the drive unit (1) on the basis of the differential velocity in such a manner that the frequency of a received signal reflected by the obstacle is in the resonant frequency range (33).

8. Ultrasonic distance sensor according to Claim 7, **characterized by** a filter unit (16) for subjecting the received reflected signal to bandpass filtering to the resonant frequency range (33).

9. Ultrasonic distance sensor according to one of Claims 7-8, **characterized by** a controllable amplifier (14) for controlling the transmission power on the basis of the deviation of the transmission signal from the resonant frequency range (33).

10. Ultrasonic distance sensor according to one of Claims 7-9, **characterized by** a data interface (18) to a temperature sensor (19) for correcting the frequency of the emitted ultrasonic signal on the basis of the temperature.

11. Ultrasonic distance sensor according to one of Claims 7-10, **characterized by** an interface (24) to a displacement sensor (25) for determining an intrinsic velocity of a movement of the ultrasonic distance sensor (10).

## Revendications

1. Procédé de mesure de distance, un signal ultrasonique étant généré et émis, le signal ultrasonique réfléchi par un obstacle étant reçu par un capteur et le temps de propagation du signal réfléchi étant interprété pour déterminer la distance, **caractérisé en ce qu'**une vitesse différentielle entre le capteur et l'obstacle est déterminée et que la fréquence du signal ultrasonique émis est sélectionnée en fonction de la vitesse différentielle en dehors d'une plage de fréquences de résonance du capteur de telle sorte que la fréquence du signal réfléchi reçu se trouve dans la plage de fréquences de résonance.

2. Procédé selon la revendication 1, **caractérisé en ce que** le signal reçu est filtré avec un filtre passe-bande à la plage de fréquences de résonance.

3. Procédé selon l'une des revendications précédentes, **caractérisé en ce que** lors de l'émission du signal, la puissance d'émission s'amplifie à mesure que l'écart entre la fréquence du signal émis et la plage de fréquences de résonance augmente.

4. Procédé selon l'une des revendications précédentes, **caractérisé en ce qu'**un écart du signal émis par rapport à la plage de fréquences de résonance est choisi de telle sorte que l'écart de fréquence choisi correspond à un décalage Doppler d'un signal à la vitesse différentielle.

5. Procédé selon la revendication 4, **caractérisé en ce que** la température de l'air est déterminée et que le décalage Doppler est déterminé en tenant compte de la dépendance à la température de la vitesse du son.

6. Procédé selon l'une des revendications précédentes, **caractérisé en ce que** la vitesse différentielle est déterminée à partir d'une variation dans le temps de la distance entre le capteur et l'obstacle déterminée au moyen du capteur à ultrasons.

7. Détecteur de distance à ultrasons (10) comprenant une membrane (5) pour émettre et recevoir des ultrasons, la membrane (5) présentant une plage de fréquences de résonance (33), et comprenant une unité de commande (1) pour exciter la membrane (5) en une oscillation pour produire des ultrasons, **caractérisé par** une unité de détection (17) pour détecter une vitesse différentielle par rapport à un obstacle, la membrane étant excitée par l'unité de commande (1) en une oscillation en dehors de la plage de fréquences de résonance (33) en fonction de la vitesse différentielle de telle sorte que la fréquence d'un signal reçu réfléchi par l'obstacle se trouve dans la plage de fréquences de résonance (33).

8. Détecteur de distance à ultrasons selon la revendication 7, **caractérisé par** une unité de filtrage (16) pour le filtrage passe-bande du signal reçu réfléchi à la plage de fréquences de résonance (33).

9. Détecteur de distance à ultrasons selon l'une des revendications 7-8, **caractérisé par** un amplificateur réglable (14) pour réguler la puissance d'émission en fonction de l'écart entre le signal émis et la plage de fréquences de résonance (33).

10. Détecteur de distance à ultrasons selon l'une des revendications 7-9, **caractérisé par** une interface de données (18) avec un capteur de température (19) pour la correction du signal ultrasonique émis en fonction de la température.

11. Détecteur de distance à ultrasons selon l'une des revendications 7-10, **caractérisé par** une interface (24) avec un capteur de course (25) pour la détermination d'une vitesse propre d'un mouvement du détecteur de distance à ultrasons (10).

**Fig. 1**

**Fig. 2**

**Fig. 3**

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5991234 A
- EP 0574925 A2

- US 4914951 A